# EUROPEAN PATENT APPLICATION

(11) **EP 3 179 373 A1**
(43) Date of publication of application: **14.06.2017**
(21) Application number: 15868109.8
(22) Date of filing: 06.12.2015
(51) Int. Cl.: G06F 12/06

(54) **STORAGE MANAGEMENT METHOD, STORAGE MANAGEMENT DEVICE AND STORAGE APPARATUS**

(30) Priority: 09.12.2014 CN 201410749285
(71) Applicant: Huawei Technologies Co. Ltd., Shenzhen, Guangdong 518129 (CN)
(72) Inventor: WEI, Zhian, Shenzhen Guangdong 518129 (CN)
(74) Representative: Goddar, Heinz J.
(86) International application number: PCT/CN2015/096506
(87) International publication number: WO 2016/091127

(57) **Abstract**

A storage management method, a storage management apparatus, and a storage device. Implementation of the method includes: The method is applied to a virtual machine system, where a logical disk is allocated to a virtual machine in the virtual machine system, and the logical disk includes at least two types of physical disks. The storage management method includes: obtaining logical disk composition information of the virtual machine, where the logical disk composition information of the virtual machine is used to identify a distribution status (101), in each type of physical disk, of logical disk storage space of the virtual machine; and adjusting the logical disk composition information (102) of the virtual machine according to a preset load balancing policy. Adjusting the logical disk composition information of the virtual machine does not need to create a new logical disk, and therefore does not need to migrate a logical disk between hosts. Therefore, time for resolving an access hotspot problem is shortened, and resources occupied in resolving the access hotspot problem are reduced.

## Description

This application claims priority to Chinese Patent Application No. 201410749285.9, filed with the Chinese Patent Office on December 9, 2014 and entitled "STORAGE MANAGEMENT METHOD, STORAGE MANAGEMENT APPARATUS, AND STORAGE DEVICE", which is incorporated herein by reference in its entirety.

### TECHNICAL FIELD

The present invention relates to the field of computer technologies, and in particular, to a storage management method, a storage management apparatus, and a storage device.

### BACKGROUND

A virtual machine (Virtual Machine, VM) refers to a complete software-simulated computer system that has complete hardware system functions and that runs in a totally isolated environment. After a virtual machine is created, storage space of a disk is allocated to the virtual machine for independent use.

I/O (Input/Output, input/output) performance of a disk directly affects virtual machine performance. In an operation and maintenance process, such as cloud management, I/O performance of a service VM needs to be adjusted in time due to a service requirement. In addition, once an access hotspot problem occurs in some physical disks, I/O access needs to be directed to a physical disk with lighter load in time to balance load. An access hotspot usually exists in physical disks that constitute a redundant array of independent disks (Redundant Array of Independent Disks, RAID) set. For example, a RAID set includes five physical disks. If massive I/O operations are performed on the RAID set (storage pool), access hotspots occur in all the five physical disks.

Currently, migration of a virtual machine between hosts is usually implemented to resolve an access hotspot problem. Details are as follows: A new logical disk is created in a physical disk with lighter load, all data in a logical disk of a virtual machine is migrated to the newly created logical disk, a logical disk number of the new logical disk is notified to the virtual machine, and the original logical disk of the virtual machine is deleted.

In the foregoing process, a new logical disk needs to be created, a logical disk number is updated, and all data in an entire logical disk needs to be migrated. The foregoing process results in creation of a logical disk and migration of a large amount of data. As a result, not only excessively long time is required but also excessive resources are occupied.

### SUMMARY

Embodiments of the present invention provide a storage management method, a storage management apparatus, and a storage device, to shorten time for resolving an access hotspot problem, and reduce resources occupied in resolving the access hotspot problem.

A first aspect of the embodiments of the present invention provides a storage management method, applied to a virtual machine system, where a logical disk is allocated to a virtual machine in the virtual machine system, the logical disk includes at least two types of physical disks, and the storage management method includes:
obtaining logical disk composition information of the virtual machine, where the logical disk composition information of the virtual machine is used to identify a distribution status, in each type of physical disk, of logical disk storage space of the virtual machine; and
adjusting the logical disk composition information of the virtual machine according to a preset load balancing policy.

With reference to an implementation manner of the first aspect, in a first possible implementation manner, before the obtaining logical disk composition information of the virtual machine, the method further includes:
receiving storage capability indication information of the virtual machine, where the storage capability indication information of the virtual machine includes one or a combination of the following information: an input/output performance requirement of the logical disk of the virtual machine and a storage space performance requirement of the logical disk of the virtual machine;
determining a distribution proportion, in each type of physical disk, of the logical disk of the virtual machine according to the storage capability indication information of the virtual machine; and
requesting storage space in each type of physical disk according to the determined distribution proportion, and creating the logical disk of the virtual machine by using the requested storage space.

With reference to the first possible implementation manner of the first aspect, in a second possible implementation manner, the method further includes:
after receiving to-be-written data that is to be written to the logical disk of the virtual machine, if the storage capability indication information of the virtual machine indicates that input/output performance of the logical disk of the virtual machine takes priority, preferentially writing the to-be-written data to storage space of a type of physical disk that has relatively high input/output performance and that is in the logical disk; or if the storage capability indication information of the virtual machine indicates that storage space performance of the logical disk of the virtual machine takes priority, preferentially writing the to-be-written data to storage space of a type of physical disk that has relatively low input/output performance and that is in the logical disk.

With reference to the implementation manner of the first aspect, in a third possible implementation manner, the adjusting the logical disk composition information of the virtual machine according to a preset load balancing policy includes:
monitoring a logical disk activeness of the virtual machine; and transferring data in storage space of a first type of physical disk in the logical disk of the virtual machine to a second type of physical disk if the logical disk activeness is lower than a preset threshold, where input/output performance of the first type of physical disk is higher than input/output performance of the second type of physical disk.

With reference to the implementation manner of the first aspect, in a fourth possible implementation manner, the adjusting the logical disk composition information of the virtual machine according to a preset load balancing policy includes:
monitoring whether there is a hotspot disk in the logical disk storage space of the virtual machine, where the hotspot disk is a physical disk in which an access hotspot occurs; and if there is logical disk storage space of the virtual machine in the hotspot disk, transferring data in the hotspot physical disk of the logical disk of the virtual machine to a non-hotspot physical disk, and deleting a belonging relationship between the logical disk and storage space occupied by the logical disk in the hotspot disk.

With reference to the implementation manner of the first aspect, in a fifth possible implementation manner, the adjusting the logical disk composition information of the virtual machine according to a preset load balancing policy includes:
monitoring whether cold data exists in the logical disk of the virtual machine, where the cold data is data with an access frequency lower than a first threshold; and if the cold data exists, transferring the cold data from a first type of physical disk in which the cold data currently exists to a second type of physical disk, where input/output performance of the first type of physical disk is higher than input/output performance of the second type of physical disk.

With reference to the implementation manner of the first aspect, in a sixth possible implementation manner, the adjusting the logical disk composition information of the virtual machine according to a preset load balancing policy includes:
monitoring whether hot data exists in the logical disk of the virtual machine, where the hot data is data with an access frequency higher than a second threshold; and if the hot data exists, transferring the hot data from a second type of physical disk in which the hot data currently exists to a first type of physical disk, where input/output performance of the first type of physical disk is higher than input/output performance of the second type of physical disk.

A second aspect of the embodiments of the present invention provides a storage management apparatus, applied to a virtual machine system, where a logical disk is allocated to a virtual machine in the virtual machine system, the logical disk includes at least two types of physical disks, and the storage management apparatus includes:
an information obtaining unit, configured to obtain logical disk composition information of the virtual machine, where the logical disk composition information of the virtual machine is used to identify a distribution status, in each type of physical disk, of logical disk storage space of the virtual machine; and
a load balancing unit, configured to adjust the logical disk composition information of the virtual machine according to a preset load balancing policy.

With reference to an implementation manner of the second aspect, in a first possible implementation manner, the storage management apparatus further includes:
an information receiving unit, configured to receive storage capability indication information of the virtual machine before the information obtaining unit obtains the logical disk composition information of the virtual machine, where the storage capability indication information of the virtual machine includes one or a combination of the following information: an input/output performance requirement of the logical disk of the virtual machine and a storage space performance requirement of the logical disk of the virtual machine;
a proportion determining unit, configured to determine a distribution proportion, in each type of physical disk, of the logical disk of the virtual machine according to the storage capability indication information of the virtual machine; and
a space requesting unit, configured to request storage space in each type of physical disk according to the determined distribution proportion, and create the logical disk of the virtual machine by using the requested storage space.

With reference to the implementation manner of the second aspect, in a second possible implementation manner, the storage management apparatus further includes:
a write control unit, configured to: after receiving to-be-written data that is to be written to the logical disk of the virtual machine, if the storage capability indication information of the virtual machine indicates that input/output performance of the logical disk of the virtual machine takes priority, preferentially write the to-be-written data to storage space of a type of physical disk that has relatively high input/output performance and that is in the logical disk; or if the storage capability indication information of the virtual machine indicates that storage space performance of the logical disk of the virtual machine takes priority, preferentially write the to-be-written data to storage space of a type of physical disk that has relatively low input/output performance and that is in the logical disk.

With reference to the implementation manner of the second aspect, in a third possible implementation manner, the load balancing unit includes:
a first monitoring unit, configured to monitor a logical disk activeness of the virtual machine; and
a first balancing unit, configured to: transfer data in storage space of a first type of physical disk in the logical disk of the virtual machine to a second type of physical disk if the logical disk activeness is lower than a preset threshold, where input/output performance of the first type of physical disk is higher than input/output performance of the second type of physical disk.

With reference to the implementation manner of the second aspect, in a fourth possible implementation manner, the load balancing unit includes:
a second monitoring unit, configured to monitor whether there is a hotspot disk in the logical disk storage space of the virtual machine, where the hotspot disk is a physical disk in which an access hotspot occurs; and
a second balancing unit, configured to: if there is logical disk storage space of the virtual machine in the hotspot disk, transfer data in the hotspot physical disk of the logical disk of the virtual machine to a non-hotspot physical disk, and delete a belonging relationship between the logical disk and storage space occupied by the logical disk in the hotspot disk.

With reference to the implementation manner of the second aspect, in a fifth possible implementation manner, the load balancing unit includes:
a third monitoring unit, configured to monitor whether cold data exists in the logical disk of the virtual machine, where the cold data is data with an access frequency lower than a first threshold; and
a third balancing unit, configured to: if the cold data exists, transfer the cold data from a first type of physical disk in which the cold data currently exists to a second type of physical disk, where input/output performance of the first type of physical disk is higher than input/output performance of the second type of physical disk.

With reference to the implementation manner of the second aspect, in a sixth possible implementation manner, the load balancing unit includes:
a fourth monitoring unit, configured to monitor whether hot data exists in the logical disk of the virtual machine, where the hot data is data with an access frequency higher than a second threshold; and
a fourth balancing unit, configured to: if the hot data exists, transfer the hot data from a second type of physical disk in which the hot data currently exists to a first type of physical disk, where input/output performance of the first type of physical disk is higher than input/output performance of the second type of physical disk.

A third aspect of the embodiments of the present invention provides a storage device, including at least two types of physical disks, and further including:
a storage management apparatus, where the storage management apparatus is connected to the physical disks by using a communicable link, and the storage management apparatus is the storage management apparatus according to any one of claims 8 to 14.

It can be learned from the foregoing technical solutions that the embodiments of the present invention have the following advantages: There is more than one type of physical disk in a storage device, and logical disk storage space may be distributed in different physical disks. Adjusting logical disk composition information of a virtual machine according to a preset load balancing policy may change a distribution status, in each type of physical disk, of the logical disk storage space, so as to achieve load balancing. Adjusting the logical disk composition information of the virtual machine does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

### BRIEF DESCRIPTION OF DRAWINGS

To describe the technical solutions in the embodiments of the present invention more clearly, the following briefly describes the accompanying drawings required for describing the embodiments. Apparently, the accompanying drawings in the following description show merely some embodiments of the present invention, and a person of ordinary skill in the art may still derive other drawings from these accompanying drawings without creative efforts.
FIG. 1 is a schematic flowchart of a method according to an embodiment of the present invention;
FIG. 2 is a schematic diagram of a storage structure in an application scenario according to an embodiment of the present invention;
FIG. 3 is a schematic diagram of a storage structure in an application scenario according to an embodiment of the present invention;
FIG. 4 is a schematic flowchart of a method according to an embodiment of the present invention;
FIG. 5 is a schematic diagram of a storage structure in an application scenario according to an embodiment of the present invention;
FIG. 6 is a schematic diagram of a storage structure in an application scenario according to an embodiment of the present invention;
FIG. 7 is a schematic diagram of a storage structure in an application scenario according to an embodiment of the present invention;
FIG 8 is a schematic diagram of a storage structure in an application scenario according to an embodiment of the present invention;
FIG. 9 is a schematic structural diagram of a storage management apparatus according to an embodiment of the present invention;
FIG. 10 is a schematic structural diagram of a storage management apparatus according to an embodiment of the present invention;
FIG. 11 is a schematic structural diagram of a storage management apparatus according to an embodiment of the present invention;
FIG. 12A is a schematic structural diagram of a storage management apparatus according to an embodiment of the present invention;
FIG. 12B is a schematic structural diagram of a storage management apparatus according to an embodiment of the present invention;
FIG. 12C is a schematic structural diagram of a storage management apparatus according to an embodiment of the present invention;
FIG. 12D is a schematic structural diagram of a storage management apparatus according to an embodiment of the present invention;
FIG. 13 is a schematic structural diagram of a storage device according to an embodiment of the present invention; and
FIG. 14 is a schematic structural diagram of a storage device according to an embodiment of the present invention.

### DESCRIPTION OF EMBODIMENTS

To make the objectives, technical solutions, and advantages of the present invention clearer, the following further describes the present invention in detail with reference to the accompanying drawings. Apparently, the described embodiments are merely a part rather than all of the embodiments of the present invention. All other embodiments obtained by a person of ordinary skill in the art based on the embodiments of the present invention without creative efforts shall fall within the protection scope of the present invention.

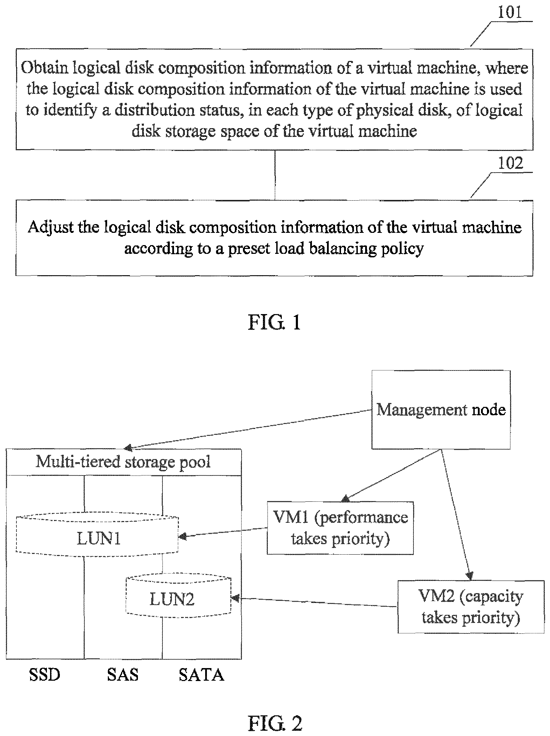

An embodiment of the present invention provides a storage management method, applied to a virtual machine system. A logical disk is allocated to a virtual machine in the virtual machine system, and the logical disk includes at least two types of physical disks. As shown in FIG. 1, the method includes the following steps.

101: Obtain logical disk composition information of the virtual machine, where the logical disk composition information of the virtual machine is used to identify a distribution status, in each type of physical disk, of logical disk storage space of the virtual machine.

In this embodiment of the present invention, the logical disk is a sum of storage space that has a logical disk number and that is allocated to the virtual machine. The logical disk may be a sum of storage space allocated to a file system in a virtual file system, and the logical disk may also have a logical disk number. The logical disk is relative to a physical disk, and the logical disk is not a physical entity, but corresponds to storage space in a physical entity, that is, the physical disk.

The logical disk in this embodiment of the present invention is the logical disk of the virtual machine. The logical disk composition information is used to identify the distribution status, in each type of physical disk, of the logical disk storage space of the virtual machine. More specifically, the distribution status may be various types of information, such as information about a distribution proportion, in each type of physical disk, of the logical disk storage space, information about a corresponding address segment, in each type of physical disk, of the logical disk storage space, or an occupied address segment in the logical disk storage space. The information about the distribution proportion may alternatively be a size of storage space occupied by the logical disk in each type of physical disk. The foregoing occupied address segment is used to indicate an address segment at which data is stored. Different disk distribution information may be specifically selected as the logical disk composition information according to different load balancing manners. This is not uniquely limited in this embodiment of the present invention.

102: Adjust the logical disk composition information of the virtual machine according to a preset load balancing policy.

In this embodiment of the present invention, a load balancing starting condition and an operation rule for achieving load balancing may be preset. The load balancing starting condition may be a preset starting rule. For example, an access hotspot occurs in a physical disk, and there is only storage space of the logical disk in the physical disk in which the access hotspot occurs; or the logical disk occupies relatively much space of a physical disk of a high performance type, but the logical disk is not active actually (does not have a high performance requirement); or a current distribution status, in each physical disk, of storage space of a logical disk cannot meet a performance requirement, and this may be used as the load balancing starting condition. The operation rule for achieving load balancing may be any means that can achieve balancing between physical disks, for example, transferring data in a logical disk or adjusting a distribution status, in a specific physical disk, of logical disk storage space. A specific load balancing starting condition and a specific operation rule for achieving load balancing may be set according to different application scenarios and application requirements. This is not uniquely limited in this embodiment of the present invention.

In this embodiment of the present invention, there is more than one type of physical disk in a storage device. Logical disk storage space may be distributed in different physical disks. Adjusting logical disk composition information of a virtual machine according to a preset load balancing policy may change a distribution status, in each type of physical disk, of the logical disk storage space, so as to achieve load balancing. Adjusting the logical disk composition information of the virtual machine does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

The foregoing embodiment is mainly to achieve load balancing, so as to resolve the access hotspot problem. This embodiment of the present invention further provides: input/output performance of a logical disk is determined autonomously in a logical disk creation process, so as to control input/output performance of different logical disks, and allow input/output performance of a logical disk to be adapt to an application that is running in the logical disk, thereby implementing differentiated quality of service in different logical disks. A detailed solution is as follows: Before the obtaining logical disk composition information of the virtual machine, the method further includes:
receiving storage capability indication information of the virtual machine, where the storage capability indication information of the virtual machine includes one or a combination of the following information: an input/output performance requirement of the logical disk of the virtual machine and a storage space performance requirement of the logical disk of the virtual machine;
determining a distribution proportion, in each type of physical disk, of the logical disk of the virtual machine according to the storage capability indication information of the virtual machine; and
requesting storage space in each type of physical disk according to the determined distribution proportion, and creating the logical disk of the virtual machine by using the requested storage space.

In this embodiment, there is more than one type of physical disk in a storage device, and different types of physical disks have different input/output performance. For example, among a SATA (Serial Advanced Technology Attachment, serial port) physical disk, a SAS (Serial Attached Small Computer System Interface, serial attached small computer system interface) physical disk, an NL-SAS (Near line Small Computer System Interface, near line SAS) physical disk, and an SSD (Solid State Disk, solid state disk), a descending sequence according to I/O performance is SSD>SAS>NL-SAS>SATA; and a sequence according to storage space costs is in reverse to the foregoing sequence. Therefore, logical disks having different I/O performance may be obtained by adjusting a distribution proportion, in each type of physical disk, of logical disk storage space. Specifically, if there is a relatively high I/O performance requirement, a distribution proportion, in a logical disk that has relatively high I/O performance, of the logical disk storage space is set to be relatively high, or otherwise the distribution proportion is set to be relatively low. In this way, not only differentiated quality of service is implemented in different logical disks, but also I/O performance of the storage device is appropriately distributed, making full use of the I/O performance of the storage device.

This embodiment of the present invention further provides a write control solution. Details are as follows: After to-be-written data that is to be written to the logical disk of the virtual machine is received, if the storage capability indication information of the virtual machine indicates that input/output performance of the logical disk of the virtual machine takes priority, the to-be-written data is preferentially written to storage space of a type of physical disk that has relatively high input/output performance and that is in the logical disk; or if the storage capability indication information of the virtual machine indicates that storage space performance of the logical disk of the virtual machine takes priority, the to-be-written data is preferentially written to storage space of a type of physical disk that has relatively low input/output performance and that is in the logical disk.

With the foregoing solution, different service performance may be provided for logical disks that have different input/output performance requirements. In addition, if the foregoing data write manner is used, a proportion, occupied by a logical disk requiring that storage space performance takes priority, in a physical disk having high input/output performance is further reduced. Correspondingly, there is a lower possibility that input/output performance for a logical disk that has a relatively high input/output performance requirement is preempted, and the input/output performance may be further ensured for the logical disk that has a relatively high input/output performance requirement.

In the foregoing embodiment, the storage capability indication information needs to be received. A source of the storage capability indication information may be provided by a device to be selected by a user, or may be set by a user autonomously. Therefore, in this embodiment of the present invention, details may be as follows: Before the receiving storage capability indication information, the method further includes: sending options of the input/output performance requirement and the storage space performance requirement to a display device.

The receiving storage capability indication information includes:
receiving the storage capability indication information, where the storage capability indication information indicates the input/output performance requirement and/or the storage space performance requirement, or the storage capability indication information indicates another performance requirement different from the foregoing options.

In this embodiment of the present invention, options are provided to be selected by a user. The storage capability indication information may be selected only from the options or may be entered by a user autonomously. A recommended option may be set in the options. The recommended option may be determined according to a current space proportion of each type of physical disk in the storage device, or may be determined according to a type of logical disk to be created, or determined according to a user priority corresponding to the logical disk, or the like.

This embodiment of the present invention further provides four optional implementation solutions for load balancing starting conditions and corresponding operation rules for achieving load balancing. Details are as follows:
1. A logical disk activeness of the virtual machine is monitored. Data in storage space of a first type of physical disk in the logical disk of the virtual machine is transferred to a second type of physical disk if the logical disk activeness is lower than a preset threshold. Input/output performance of the first type of physical disk is higher than input/output performance of the second type of physical disk.
2. Whether there is a hotspot disk in the logical disk storage space of the virtual machine is monitored. The hotspot disk is a physical disk in which an access hotspot occurs. If there is logical disk storage space of the virtual machine in the hotspot disk, data in the hotspot physical disk of the logical disk of the virtual machine is transferred to a non-hotspot physical disk, and a belonging relationship between the logical disk and storage space occupied by the logical disk in the hotspot disk is deleted.
3. Whether cold data exists in the logical disk of the virtual machine is monitored. The cold data is data with an access frequency lower than a first threshold. If the cold data exists, the cold data is transferred from a first type of physical disk in which the cold data currently exists to a second type of physical disk, where input/output performance of the first type of physical disk is higher than input/output performance of the second type of physical disk.
4. Whether hot data exists in the logical disk of the virtual machine is monitored. The hot data is data with an access frequency higher than a second threshold. If the hot data exists, the hot data is transferred from a second type of physical disk in which the hot data currently exists to a first type of physical disk, where input/output performance of the first type of physical disk is higher than input/output performance of the second type of physical disk.

The foregoing four load balancing policies may be combined at random for use or may be used separately.

In this embodiment of the present invention, there is more than one type of physical disk in the storage device. This embodiment of the present invention further provides optional types of physical disks. Details are as follows: The foregoing types of physical disks include:
at least one of a serial port SATA disk, a serial attached small computer system interface SAS disk, a near line serial attached small computer system interface NLSAS disk, or a solid state disk SSD.

In this embodiment, one type or multiple types of physical disks in the storage device may be the foregoing enumerated disk types. There are many other physical disk types, which are impossible to be enumerated one by one in this embodiment of the present invention. Therefore, the foregoing types of physical disks may not the foregoing enumerated physical disk types of physical disks. In this embodiment of the present invention, each RAID including a same type of disks is referred to as a tier.

In the following embodiment, this embodiment of the present invention is described in more detail by using examples in combination with a specific physical disk type and based on several specific application scenarios. Because one logical disk has one LUN (Logical Unit Number, logical unit number), a logical disk is referred to as a LUN in the following embodiment.

The present invention proposes that a storage device is managed at a control plane to fully use a capability on the storage device side, and meet requirements in the following scenarios if data does not need to be migrated between LUNs:
1. A distribution ratio, in tiers having different performance, of the logical disk of the VM is set according to a service requirement to implement differentiated QoS (Quality of Service, quality of service).
2. Distribution, in the tiers having different performance, of the logical disk storage space is adjusted according to a VM service requirement change, to implement data reallocation without service interruption.
3. Data stored in a VM that is in an off state for a long time is automatically allocated to a tier having lower performance.
4. According to storage-side performance analysis, data in a LUN is dynamically adjusted according to a cold/hot degree, so as to improve virtual machine performance if storage performance of the logical disk does not change.

Based on the requirements in the foregoing four scenarios, a specific embodiment example of this embodiment of the present invention is as follows:
1. A distribution ratio, in the tiers having different performance, of the logical disk of the VM is set according to a service requirement to implement differentiated QoS.
   If the technologies in the present invention are not applied, on a virtual platform (Hypervisor), only an I/O access upper limit of each virtual machine can be set, and differentiated quality of service on I/O access cannot be provided for the VM. Upper limit-based control results in a waste of storage resources if entire I/O load does not reach a storage capability upper limit.
   After the solution of this embodiment of the present invention is used, the I/O upper limit of the VM does not need to be specified, and a distribution ratio, in each tier, of the logical disk is set according to a storage performance requirement of the VM. The distribution ratio may be set in the following several manners according to a physical disk support capability to ensure storage access QoS.
   1) A distribution ratio, in each tier, of a LUN used by the logical disk is set. An example is as follows:
      As shown in FIG. 2, a management node performs storage management. A storage device is a multi-tiered storage pool (Multi Tiering Storage Pool). There are three types of physical disks in the storage device: an SSD, a SAS, and a SATA respectively. There are two virtual machines, that is, a VM1 and a VM2, which correspond to two logical disks respectively: a LUN1 and a LUN2. The management node communicates with the storage device by using a storage management interface. The management node communicates with the virtual machines by using a virtual machine management interface. In the VM1, performance takes priority, and in the VM2, a capacity takes priority.

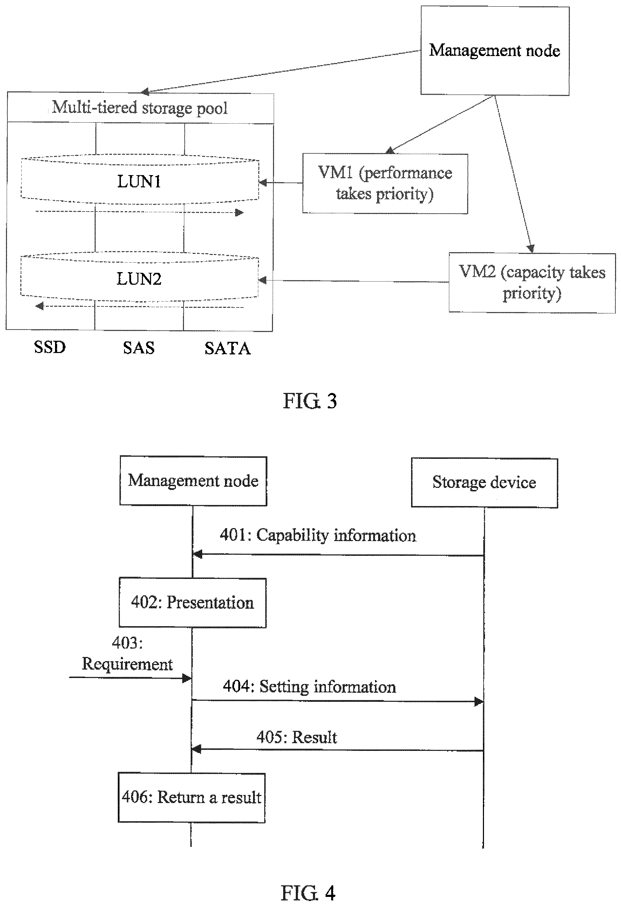

      A distribution proportion based on that performance takes priority is: SSD:SAS:SATA = 80:20:0.
      A distribution proportion based on that a capacity takes priority is: SSD:SSD:SAS:SATA = 0:50:50.
   2) A write policy, in each tier, of a LUN used by the logical disk is set. An example is as follows:
      As shown in FIG. 3, a management node performs storage management. A storage device is a multi-tiered storage pool. There are three types of physical disks in the storage device: an SSD, a SAS, and a SATA respectively. There are two virtual machines, that is, a VM1 and a VM2, which correspond to two logical disks respectively: a LUN1 and a LUN2. The management node communicates with the storage device by using a storage management interface. The management node communicates with the virtual machines by using a virtual machine management interface. In the VM1, performance takes priority, and in the VM2, a capacity takes priority.

      If performance takes priority, storage space for data to be preferentially written is allocated from a high-performance layer, as shown by a direction of an upper dashed line arrow shown in FIG 3.
      If a capacity takes priority, storage space for data to be preferentially written is allocated from a capacity layer, as shown by a direction of a lower dashed line arrow shown in FIG 3.
   3) Configuration is automatically performed according to recommended settings reported by the storage device.

   To implement the foregoing control on the distribution of the logical disk storage space, the management node may have the following capabilities in implementation.
   1) Storage capability information collection
      The management node is responsible for obtaining composition information of a current Multi Tiering Storage Pool from the storage device, for example, a disk type, RAID information, a capacity, and an I/O reference capability. The I/O reference capability refers to a property parameter of an I/O capability of a type of physical disk, and can be quantized. In addition, types of physical disks may be sorted only according to their I/O capabilities. For example, SDS>SAS>NLSAS>SATA.
   2) Storage capability profile (configuration file) management
      The management node is responsible for converting capability information obtained on a storage side to a user-friendly QoS profile. When creating a logical disk, a user specifies, by selecting a profile, a policy or parameter requirement for creating a logical disk. In the policy, I/O performance may take priority or a capacity may take priority, and the parameter requirement may be a setting about a specific I/O capability parameter. A user usually does not understand hardware details, and after the information is converted, the user-friendly QoS profile enables the user to set the logical disk more easily and visually. For example, it may be considered that an SLA (Service Level Agreement, Service Level Agreement) of a disk of an SSD type is gold (Gold), an SLA of a disk of an SAS type is silver (Silver), and an SLA of a disk of a SATA type is bronze (Bronze). Such level information instead of hardware details is directly presented to the user. Information presentation by class is friendly to a user and therefore is recommended.
   3) Storage setting
      The management node is responsible for delivering, to the storage device by using the storage management interface, a policy or parameter information selected by a user, and may also receive an execution result returned by the storage device, and send the execution result to a display device for presentation.
      A processing process in which the solution of this embodiment of the present invention is applied is shown in FIG. 4 and includes the following steps:
      401: The management node receives storage capability information reported by the storage device.

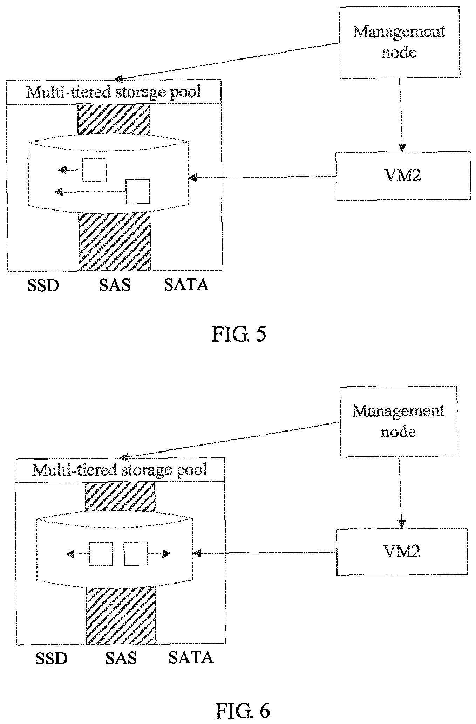

      Before this step, the management node may first send a capability information collection instruction to the storage device, to instruct the storage device to report capability information. This step may alternatively be that the storage device proactively reports the capability information after a communication link between the storage device and the management node is established.
      402: After receiving the storage capability information, the management node converts the received storage capability information to a user-friendly QoS profile, and sends the QoS profile to a display device for presentation.
      In this step, the QoS profile may be presented to a user in a GUI (Graphical User Interface, graphical user interface) manner.
      403: When needing to create a logical disk, a user selects a corresponding profile according to a requirement, and sends the requirement to the management node.
      404: The management node determines, according to the received requirement, the profile selected by the user, and specifies that setting information carrying a corresponding storage setting parameter is sent to the storage device by using a storage management interface.
      405: The storage device creates a logical disk according to the storage setting parameter carried in the setting information, and sends a result to the management node.
      For a specific logical disk creation manner in this step, refer to a logical disk creation solution in which performance takes priority or storage takes priority. This is not described repeatedly herein.
      406: The management node returns the result to the display device, to notify the user of a logical disk creation result.
2. Distribution, in the tiers having different performance, of the logical disk storage space is adjusted according to a VM service requirement change, to implement data reallocation without service interruption. The solution of this embodiment can be applied to VM storage load balancing.
   After the technologies in the present invention are applied, VM storage load balancing is implemented in the following application scenarios:
   1) In the solution of this embodiment, migration between LUNs is not needed, and data is reallocated between tiers in a LUN.
   2) Data is reallocated according to a logical disk performance requirement of a user if a service is not interrupted. As shown in FIG. 5, the management node performs performance upgrading on a LUN2 of a VM2 by using the storage management interface.
   3) Data is reallocated when performance of some disks degrades due to excessive access caused by access concentration of physical disks (when an access hotspot occurs). As shown in FIG. 6, an access hotspot occurs in a SAS physical disk. Data in a LUN2 is migrated from the LUN2 to an SSD and/or a SATA. In this case, storage space of the LUN2 in the SAS may not be deleted. A manner, shown in FIG. 6, for migrating the data in the LUN2 is merely used as an example for description. In actual application, migration may be performed according to a specified rule. For example, the data in the LUN2 is migrated to an SSD having better performance, instead of being migrated to a SATA having poorer performance. A specific migration manner is not uniquely limited in this embodiment of the present invention.

   In a process of implementing this embodiment, a processing process of a management node is as follows:
   First, the management node queries a storage device to obtain a composition and storage capability information of a Multi Tiering Storage Pool.

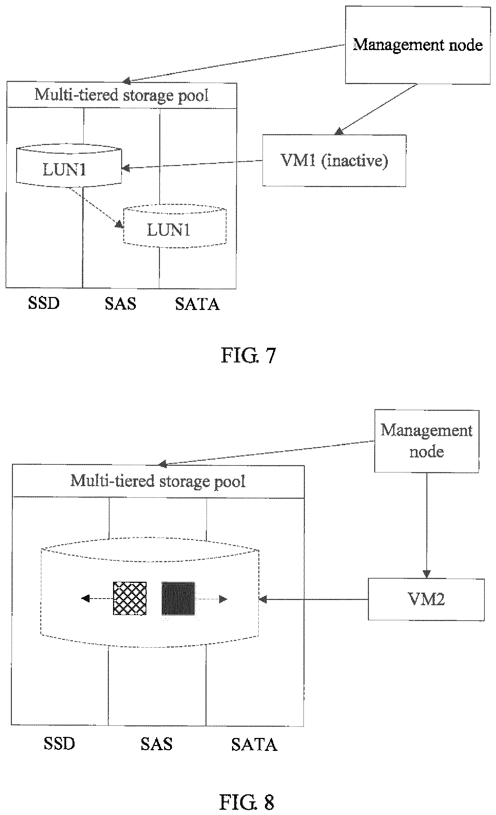

   Then, the management node determines, according to the storage capability information obtained by means of querying, a data reallocation policy (how to migrate data) that is used when an access hotspot occurs in a physical disk of the storage device. Alternatively, a distribution ratio, in each tier, of a LUN used by a logical disk is reset according to a logical disk storage capability requirement of a VM.
   Then, the management node instructs the storage device to reallocate data at background to complete data migration.
3. Data stored in a VM that is in an off state for a long time is automatically allocated to a tier having lower performance. This embodiment may be applied to data reallocation from the inactive VM to a capacity layer.
   After the solution of this embodiment is applied, for a VM that is inactive for a long time (that is, a low-activeness logical disk), data in the logical disk may be reallocated to a capacity layer based on selection by a user or by means of internal logic determining, to ensure that more active VMs obtain better storage access performance. As shown in FIG. 7, a VM1 is a virtual machine that is inactive for a long time. When a corresponding logical disk is the LUN1, a data migration direction is shown by a dashed line arrow direction.
   In a process of implementing this embodiment, a processing process of a management node is as follows:
   First, the management node queries a storage device to obtain a composition and storage capability information of a Multi Tiering Storage Pool.

   Then, when detecting that an inactive time of a virtual machine exceeds a threshold, the management node may ask a user whether to migrate the inactive VM to a capacity layer, or the management node may independently determine, according to the inactive time of the virtual machine, whether to migrate the inactive VM to a capacity layer.
   If it is determined that migration is to be performed, it is determined that a ratio, in each tier, of a LUN used by a logical disk of the VM is adjusted. An adjustment principle is that data is adjusted from a high-performance physical disk to a low-performance physical disk (physical disk in which the capacity layer is located).
   Then, the management node instructs the storage device to reallocate data at background to complete data migration.
4. According to storage-side performance analysis, data in a LUN is dynamically adjusted according to a cold/hot degree, so as to improve virtual machine performance if storage performance of the logical disk does not change.

After the solution of this embodiment is applied, in a large LUN virtualization scenario, according to data access status analysis, relatively active data is adjusted to a high-performance direction and less active data is adjusted to a high-capacity direction. As shown in FIG. 8, a small grid square indicates relatively active data, a black square indicates less active data, and a dashed line arrow indicates a data migration direction. In this embodiment, storage space occupied by migrated data may not be deleted.

In a process of implementing this embodiment, a processing process of a management node is as follows:
First, the management node queries a storage device to obtain a composition and storage capability information of a Multi Tiering Storage Pool.

Then, the management node instructs the storage device to perform cold/hot data analysis (that is, to determine whether there is relatively active data and whether there is less active data).

After receiving an analysis result, the management node determines a solution used by the storage device to adjust data.

Then, the management node instructs, according to the determined solution, the storage device to reallocate data at background to complete data migration.

In this embodiment of the present invention, there is more than one type of physical disk in a storage device. Logical disk storage space may be distributed in different physical disks. When load balancing needs to be performed, adjusting distribution, in each type of physical disk, of the logical disk storage space can achieve load balancing. Adjusting the distribution, in each type of physical disk, of the logical disk storage space does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

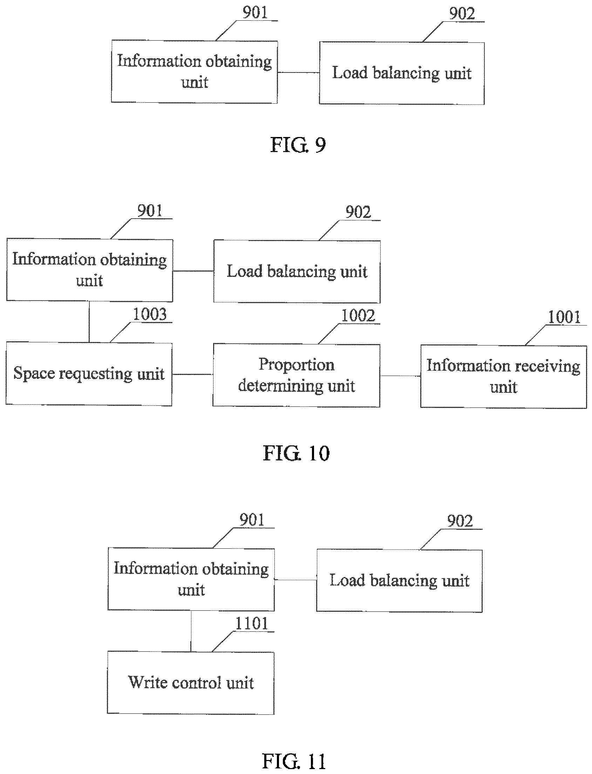

An embodiment of the present invention further provides a storage management apparatus, applied to a virtual machine system. A logical disk is allocated to a virtual machine in the virtual machine system, and the logical disk includes at least two types of physical disks. As shown in FIG. 9, the storage management apparatus includes:
an information obtaining unit 901, configured to obtain logical disk composition information of the virtual machine, where the logical disk composition information of the virtual machine is used to identify a distribution status, in each type of physical disk, of logical disk storage space of the virtual machine; and
a load balancing unit 902, configured to adjust the logical disk composition information of the virtual machine according to a preset load balancing policy.

In this embodiment of the present invention, there is more than one type of physical disk in a storage device. Logical disk storage space may be distributed in different physical disks. Adjusting logical disk composition information of a virtual machine according to a preset load balancing policy may change a distribution status, in each type of physical disk, of the logical disk storage space, so as to achieve load balancing. Adjusting the logical disk composition information of the virtual machine does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

The logical disk in this embodiment of the present invention is the logical disk of the virtual machine. The logical disk composition information is used to identify the distribution status, in each type of physical disk, of the logical disk storage space of the virtual machine. More specifically, the distribution status may be various types of information, such as information about a distribution proportion, in each type of physical disk, of the logical disk storage space, information about a corresponding address segment, in each type of physical disk, of the logical disk storage space, or an occupied address segment in the logical disk storage space. The information about the distribution proportion may alternatively be a size of storage space occupied by the logical disk in each type of physical disk. The foregoing occupied address segment is used to indicate an address segment at which data is stored. Different disk distribution information may be specifically selected as the logical disk composition information according to different load balancing manners. This is not uniquely limited in this embodiment of the present invention.

In this embodiment of the present invention, a load balancing starting condition and an operation rule for achieving load balancing may be preset. The load balancing starting condition may be a preset starting rule. For example, an access hotspot occurs in a physical disk, and there is only storage space of the logical disk in the physical disk in which the access hotspot occurs; or the logical disk occupies relatively much space of a physical disk of a high performance type, but the logical disk is not active actually (does not have a high performance requirement); or a current distribution status, in each physical disk, of storage space of a logical disk cannot meet a performance requirement, and this may also be used as the load balancing starting condition. The operation rule for achieving load balancing may be any means that can achieve balancing between physical disks, for example, transferring data in a logical disk or adjusting a distribution status, in a specific physical disk, of logical disk storage space. A specific load balancing starting condition and a specific operation rule for achieving load balancing may be set according to different application scenarios and different application requirements. This is not uniquely limited in this embodiment of the present invention.

In this embodiment of the present invention, there is more than one type of physical disk in a storage device. Logical disk storage space may be distributed in different physical disks. Adjusting logical disk composition information of a virtual machine according to a preset load balancing policy may change a distribution status, in each type of physical disk, of the logical disk storage space, so as to achieve load balancing. Adjusting the logical disk composition information of the virtual machine does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

The foregoing embodiment is mainly to achieve load balancing, so as to resolve the access hotspot problem. This embodiment of the present invention further provides: input/output performance of a logical disk is determined autonomously in a logical disk creation process, so as to control input/output performance of different logical disks, and allow input/output performance of a logical disk to be adapt to an application that is running in the logical disk, thereby implementing differentiated quality of service in different logical disks. A detailed solution is as follows: Further, as shown in FIG. 10, the foregoing storage management apparatus further includes:
an information receiving unit 1001, configured to receive storage capability indication information of the virtual machine before the information obtaining unit 901 obtains the logical disk composition information of the virtual machine, where the storage capability indication information of the virtual machine includes one or a combination of the following information: an input/output performance requirement of the logical disk of the virtual machine and a storage space performance requirement of the logical disk of the virtual machine;
a proportion determining unit 1002, configured to determine a distribution proportion, in each type of physical disk, of the logical disk of the virtual machine according to the storage capability indication information of the virtual machine; and
a space requesting unit 1003, configured to request storage space in each type of physical disk according to the distribution proportion determined by the proportion determining unit 1002, and create the logical disk of the virtual machine by using the requested storage space.

In this embodiment, there is more than one type of physical disk in a storage device, and different types of physical disks have different input/output performance. For example, among a SATA (Serial Advanced Technology Attachment, serial port) physical disk, a SAS (Serial Attached Small Computer System Interface, serial attached small computer system interface) physical disk, an NL-SAS (Near line Small Computer System Interface, near line SAS) physical disk, and an SSD (Solid State Disk, solid state disk), a descending sequence according to I/O performance is SSD>SAS>NL-SAS>SATA; and a sequence according to storage space costs is in reverse to the foregoing sequence. Therefore, logical disks having different I/O performance may be obtained by adjusting a distribution proportion, in each type of physical disk, of logical disk storage space. Specifically, if there is a relatively high I/O performance requirement, a distribution proportion, in a logical disk that has relatively high I/O performance, of the logical disk storage space is set to be relatively high, or otherwise the distribution proportion is set to be relatively low. In this way, not only differentiated quality of service is implemented in different logical disks, but also I/O performance of the storage device is appropriately distributed, making full use of the I/O performance of the storage device.

This embodiment of the present invention further provides a write control solution. Details are as follows: Further, as shown in FIG. 11, the information receiving unit 1001 is configured to receive the storage capability indication information used to indicate that input/output performance of the logical disk takes priority or storage space performance of the logical disk takes priority. The storage management apparatus further includes:
a write control unit 1101, configured to: after receiving to-be-written data that is to be written to the logical disk of the virtual machine, if the storage capability indication information of the virtual machine indicates that input/output performance of the logical disk of the virtual machine takes priority, preferentially write the to-be-written data to storage space of a type of physical disk that has relatively high input/output performance and that is in the logical disk; or if the storage capability indication information of the virtual machine indicates that storage space performance of the logical disk of the virtual machine takes priority, preferentially write the to-be-written data to storage space of a type of physical disk that has relatively low input/output performance and that is in the logical disk.

With the foregoing solution, different service performance may be provided for logical disks that have different input/output performance requirements. In addition, if the foregoing data write manner is used, a proportion, occupied by a logical disk requiring that storage space performance takes priority, in a physical disk having high input/output performance is further reduced. Correspondingly, there is a lower possibility that input/output performance for a logical disk that has a relatively high input/output performance requirement is preempted, and the input/output performance may be further ensured for the logical disk that has a relatively high input/output performance requirement.

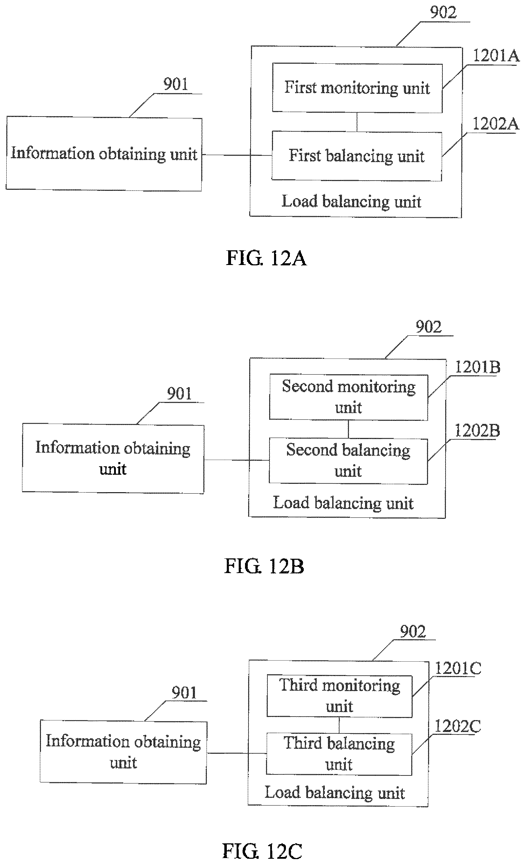

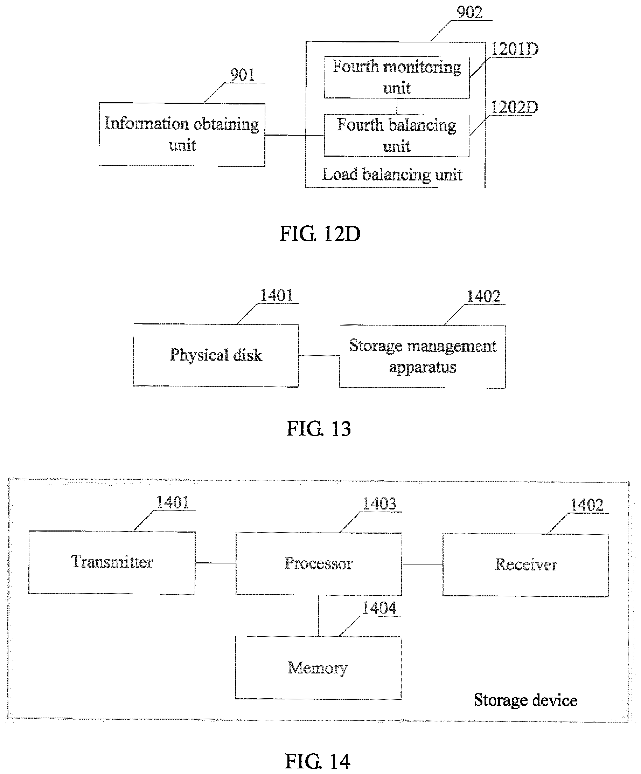

This embodiment of the present invention further provides four optional implementation solutions for load balancing starting conditions and corresponding operation rules for achieving load balancing. Details are as follows:
1. As shown in FIG. 12A, the load balancing unit 902 includes:
   a first monitoring unit 1201A, configured to monitor a logical disk activeness of the virtual machine; and
   a first balancing unit 1202A, configured to: transfer data in storage space of a first type of physical disk in the logical disk of the virtual machine to a second type of physical disk if the logical disk activeness is lower than a preset threshold, where input/output performance of the first type of physical disk is higher than input/output performance of the second type of physical disk.
2. As shown in FIG. 12B, the load balancing unit 902 includes:
   a second monitoring unit 1201B, configured to monitor whether there is a hotspot disk 1202B in the logical disk storage space of the virtual machine, where the hotspot disk is a physical disk in which an access hotspot occurs; and
   a second balancing unit, configured to: if there is logical disk storage space of the virtual machine in the hotspot disk, transfer data in the hotspot physical disk of the logical disk of the virtual machine to a non-hotspot physical disk, and delete a belonging relationship between the logical disk and storage space occupied by the logical disk in the hotspot disk.
3. As shown in FIG. 12C, the load balancing unit 902 includes:
   a third monitoring unit 1201C, configured to monitor whether cold data exists in the logical disk of the virtual machine, where the cold data is data with an access frequency lower than a first threshold; and
   a third balancing unit 1202C, configured to: if the cold data exists, transfer the cold data from a first type of physical disk in which the cold data currently exists to a second type of physical disk, where input/output performance of the first type of physical disk is higher than input/output performance of the second type of physical disk.
4. As shown in FIG. 12D, the load balancing unit 902 includes:
   a fourth monitoring unit 1201D, configured to monitor whether hot data exists in the logical disk of the virtual machine, where the hot data is data with an access frequency higher than a second threshold; and
   a fourth balancing unit 1202D, configured to: if the hot data exists, transfer the hot data from a second type of physical disk in which the hot data currently exists to a first type of physical disk, where input/output performance of the first type of physical disk is higher than input/output performance of the second type of physical disk.

In this embodiment of the present invention, there is more than one type of physical disk in the storage device. This embodiment of the present invention further provides optional types of physical disks. Details are as follows: The foregoing types of physical disks include:
at least one of a serial port SATA disk, a serial attached small computer system interface SAS disk, a near line serial attached small computer system interface NLSAS disk, or a solid state disk SSD.

An embodiment of the present invention further provides a storage device, including a physical disk 1301 and a storage management apparatus 1302, as shown in FIG 13.

The storage management apparatus 1302 is connected to the physical disk 1301 by using a communicable link. The storage management apparatus 1302 is any storage management apparatus 1302 according to an embodiment of the present invention.

In this embodiment of the present invention, there is more than one type of physical disk in a storage device. Logical disk storage space may be distributed in different physical disks. When load balancing needs to be performed, adjusting distribution, in each type of physical disk, of the logical disk storage space can achieve load balancing. Adjusting the distribution, in each type of physical disk, of the logical disk storage space does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

An embodiment of the present invention further provides another storage device, including a receiver 1401, a transmitter 1402, a processor 1403, and a memory 1404, as shown in FIG. 14. The storage device is applied to a virtual machine system. A logical disk is allocated to a virtual machine in the virtual machine system. The logical disk includes at least two types of physical disks located in the memory 1404.

The processor 1403 is configured to: obtain logical disk composition information of the virtual machine, where the logical disk composition information of the virtual machine is used to identify a distribution status, in each type of physical disk, of logical disk storage space of the virtual machine; and adjust the logical disk composition information of the virtual machine according to a preset load balancing policy.

In this embodiment of the present invention, the logical disk is a sum of storage space that has a logical disk number and that is allocated to the virtual machine. The logical disk may also be a sum of storage space allocated to a file system in a virtual file system, and the logical disk may also have a logical disk number. The logical disk is relative to a physical disk, and the logical disk is not a physical entity, but corresponds to storage space in a physical entity, that is, the physical disk.

The logical disk in this embodiment of the present invention is the logical disk of the virtual machine. The logical disk composition information is used to identify the distribution status, in each type of physical disk, of the logical disk storage space of the virtual machine. More specifically, the distribution status may be various types of information, such as information about a distribution proportion, in each type of physical disk, of the logical disk storage space, information about a corresponding address segment, in each type of physical disk, of the logical disk storage space, or an occupied address segment in the logical disk storage space. The information about the distribution proportion may alternatively be a size of storage space occupied by the logical disk in each type of physical disk. The foregoing occupied address segment is used to indicate an address segment at which data is stored. Different disk distribution information may be specifically selected as the logical disk composition information according to different load balancing manners. This is not uniquely limited in this embodiment of the present invention.

In this embodiment of the present invention, a load balancing starting condition and an operation rule for achieving load balancing may be preset. The load balancing starting condition may be a preset starting rule. For example, an access hotspot occurs in a physical disk, and there is only storage space of the logical disk in the physical disk in which the access hotspot occurs; or the logical disk occupies relatively much space of a physical disk of a high performance type, but the logical disk is not active actually (does not have a high performance requirement); or a current distribution status, in each physical disk, of storage space of a logical disk cannot meet a performance requirement, and this may also be used as the load balancing starting condition. The operation rule for achieving load balancing may be any means that can achieve balancing between physical disks, for example, transferring data in a logical disk or adjusting a distribution status, in a specific physical disk, of logical disk storage space. A specific load balancing starting condition and a specific operation rule for achieving load balancing may be set according to different application scenarios and different application requirements. This is not uniquely limited in this embodiment of the present invention.

In this embodiment of the present invention, there is more than one type of physical disk in a storage device. Logical disk storage space may be distributed in different physical disks. Adjusting logical disk composition information of a virtual machine according to a preset load balancing policy may change a distribution status, in each type of physical disk, of the logical disk storage space, so as to achieve load balancing. Adjusting the logical disk composition information of the virtual machine does not need to create a new logical disk, and therefore does not need to migrate a logical disk between hosts, that is, does not need to migrate all data in a logical disk. Therefore, time for resolving an access hotspot problem is shortened, and resources occupied in resolving the access hotspot problem are reduced.

The foregoing embodiment is mainly to achieve load balancing, so as to resolve the access hotspot problem. This embodiment of the present invention further provides: input/output performance of a logical disk is determined autonomously in a logical disk creation process, so as to control input/output performance of different logical disks, and allow input/output performance of a logical disk to be adapt to an application that is running in the logical disk, thereby implementing differentiated quality of service in different logical disks. A detailed solution is as follows: The processor 1403 is further configured to: receive storage capability indication information of the virtual machine before obtaining the logical disk composition information of the virtual machine, where the storage capability indication information of the virtual machine includes one or a combination of the following information: an input/output performance requirement of the logical disk of the virtual machine and a storage space performance requirement of the logical disk of the virtual machine; determine a distribution proportion, in each type of physical disk, of the logical disk of the virtual machine according to the storage capability indication information of the virtual machine; and request storage space in each type of physical disk according to the determined distribution proportion, and create the logical disk of the virtual machine by using the requested storage space.

In this embodiment, there is more than one type of physical disk in a storage device, and different types of physical disks have different input/output performance. For example, among a SATA (Serial Advanced Technology Attachment, serial port) physical disk, a SAS (Serial Attached Small Computer System Interface, serial attached small computer system interface) physical disk, an NL-SAS (Near line Small Computer System Interface, near line SAS) physical disk, and an SSD (Solid State Disk, solid state disk), a descending sequence according to I/O performance is SSD>SAS>NL-SAS>SATA; and a sequence according to storage space costs is in reverse to the foregoing sequence. Therefore, logical disks having different I/O performance may be obtained by adjusting a distribution proportion, in each type of physical disk, of logical disk storage space. Specifically, if there is a relatively high I/O performance requirement, a distribution proportion, in a logical disk that has relatively high I/O performance, of the logical disk storage space is set to be relatively high, or otherwise the distribution proportion is set to be relatively low. In this way, not only differentiated quality of service is implemented in different logical disks, but also I/O performance of the storage device is appropriately distributed, making full use of the I/O performance of the storage device.

This embodiment of the present invention further provides a write control solution. Details are as follows: The processor 1403 is further configured to: after receiving to-be-written data that is to be written to the logical disk of the virtual machine, if the storage capability indication information of the virtual machine indicates that input/output performance of the logical disk of the virtual machine takes priority, preferentially write the to-be-written data to storage space of a type of physical disk that has relatively high input/output performance and that is in the logical disk; or if the storage capability indication information of the virtual machine indicates that storage space performance of the logical disk of the virtual machine takes priority, preferentially write the to-be-written data to storage space of a type of physical disk that has relatively low input/output performance and that is in the logical disk.

With the foregoing solution, different service performance may be provided for logical disks that have different input/output performance requirements. In addition, if the foregoing data write manner is used, a proportion, occupied by a logical disk requiring that storage space performance takes priority, in a physical disk having high input/output performance is further reduced. Correspondingly, there is a lower possibility that input/output performance for a logical disk that has a relatively high input/output performance requirement is preempted, and the input/output performance may be further ensured for the logical disk that has a relatively high input/output performance requirement.

In the foregoing embodiment, the storage capability indication information needs to be received. A source of the storage capability indication information may be provided by a device to be selected by a user, or may be set by a user autonomously. Therefore, in this embodiment of the present invention, details may be as follows. The processor 1403 is further configured to: before receiving the storage capability indication information, send options of the input/output performance requirement and the storage space performance requirement to a display device. The receiving storage capability indication information includes: receiving the storage capability indication information, where the storage capability indication information indicates the foregoing input/output performance requirement and/or the foregoing storage space performance requirement, or the storage capability indication information indicates another performance requirement different from the foregoing options.

In this embodiment of the present invention, options are provided to be selected by a user. The storage capability indication information may be selected only from the options or may be entered by a user autonomously. A recommended option may be set in the options. The recommended option may be determined according to a current space proportion of each type of physical disk in the storage device, or may be determined according to a type of logical disk to be created, or determined according to a user priority corresponding to the logical disk, or the like.

This embodiment of the present invention further provides four optional implementation solutions for load balancing starting conditions and corresponding operation rules for achieving load balancing. Details are as follows:
1. The processor 1403 is configured to: monitor a logical disk activeness of the virtual machine; and transfer data in storage space of a first type of physical disk in the logical disk of the virtual machine to a second type of physical disk if the logical disk activeness is lower than a preset threshold, where input/output performance of the first type of physical disk is higher than input/output performance of the second type of physical disk.
2. The processor 1403 is configured to: monitor whether there is a hotspot disk in the logical disk storage space of the virtual machine, where the hotspot disk is a physical disk in which an access hotspot occurs; and if there is logical disk storage space of the virtual machine in the hotspot disk, transfer data in the hotspot physical disk of the logical disk of the virtual machine to a non-hotspot physical disk, and delete a belonging relationship between the logical disk and storage space occupied by the logical disk in the hotspot disk.
3. The processor 1403 is configured to: monitor whether cold data exists in the logical disk of the virtual machine, where the cold data is data with an access frequency lower than a first threshold; and if the cold data exists, transfer the cold data from a first type of physical disk in which the cold data currently exists to a second type of physical disk, where input/output performance of the first type of physical disk is higher than input/output performance of the second type of physical disk.
4. The processor 1403 is configured to: monitor whether hot data exists in the logical disk of the virtual machine, where the hot data is data with an access frequency lower than a second threshold; and if the hot data exists, transfer the hot data from a second type of physical disk in which the hot data currently exists to a first type of physical disk, where input/output performance of the first type of physical disk is higher than input/output performance of the second type of physical disk.

The foregoing four load balancing policies may be combined at random for use or may be used separately.

In this embodiment of the present invention, there is more than one type of physical disk in the storage device. This embodiment of the present invention further provides optional types of physical disks. Details are as follows: The foregoing types of physical disks include at least one of a serial port SATA disk, a serial attached small computer system interface SAS disk, a near line serial attached small computer system interface NLSAS disk, or a solid state disk SSD.

It should be noted that, division of the storage management apparatus and the storage device is merely logical function division, but the present invention is not limited to the foregoing division, as long as corresponding functions can be implemented. In addition, specific names of function units are merely provided for the purpose of distinguishing the units from one another, but are not intended to limit the protection scope of the present invention.

In addition, a person of ordinary skill in the art may understand that all or a part of the steps of the method embodiments may be implemented by a program instructing relevant hardware. The program may be stored in a computer readable storage medium. The storage medium may include: a read-only memory, a magnetic disk, or an optical disc.

The foregoing descriptions are merely example implementation manners of the present invention, but are not intended to limit the protection scope of the present invention. Any variation or replacement readily figured out by a person skilled in the art within the technical scope disclosed in the embodiments of the present invention shall fall within the protection scope of the present invention. Therefore, the protection scope of the present invention shall be subject to the protection scope of the claims.

## Claims

1. A storage management method, applied to a virtual machine system, wherein a logical disk is allocated to a virtual machine in the virtual machine system, the logical disk comprises at least two types of physical disks, and the storage management method comprises:
obtaining logical disk composition information of the virtual machine, wherein the logical disk composition information of the virtual machine is used to identify a distribution status, in each type of physical disk, of logical disk storage space of the virtual machine; and
adjusting the logical disk composition information of the virtual machine according to a preset load balancing policy.

2. The method according to claim 1, wherein before the obtaining logical disk composition information of the virtual machine, the method further comprises:
receiving storage capability indication information of the virtual machine, wherein the storage capability indication information of the virtual machine comprises one or a combination of the following information: an input/output performance requirement of the logical disk of the virtual machine and a storage space performance requirement of the logical disk of the virtual machine;
determining a distribution proportion, in each type of physical disk, of the logical disk of the virtual machine according to the storage capability indication information of the virtual machine; and
requesting storage space in each type of physical disk according to the determined distribution proportion, and creating the logical disk of the virtual machine by using the requested storage space.

3. The method according to claim 2, wherein the method further comprises:
after receiving to-be-written data that is to be written to the logical disk of the virtual machine, if the storage capability indication information of the virtual machine indicates that input/output performance of the logical disk of the virtual machine takes priority, preferentially writing the to-be-written data to storage space of a type of physical disk that has relatively high input/output performance and that is in the logical disk; or if the storage capability indication information of the virtual machine indicates that storage space performance of the logical disk of the virtual machine takes priority, preferentially writing the to-be-written data to storage space of a type of physical disk that has relatively low input/output performance and that is in the logical disk.

4. The method according to claim 1, wherein the adjusting the logical disk composition information of the virtual machine according to a preset load balancing policy comprises:
monitoring a logical disk activeness of the virtual machine; and transferring data in storage space of a first type of physical disk in the logical disk of the virtual machine to a second type of physical disk if the logical disk activeness is lower than a preset threshold, wherein input/output performance of the first type of physical disk is higher than input/output performance of the second type of physical disk.

5. The method according to claim 1, wherein the adjusting the logical disk composition information of the virtual machine according to a preset load balancing policy comprises:
monitoring whether there is a hotspot disk in the logical disk storage space of the virtual machine, wherein the hotspot disk is a physical disk in which an access hotspot occurs; and if there is logical disk storage space of the virtual machine in the hotspot disk, transferring data in the hotspot physical disk of the logical disk of the virtual machine to a non-hotspot physical disk, and deleting a belonging relationship between the logical disk and storage space occupied by the logical disk in the hotspot disk.

6. The method according to claim 1, wherein the adjusting the logical disk composition information of the virtual machine according to a preset load balancing policy comprises:
monitoring whether cold data exists in the logical disk of the virtual machine, wherein the cold data is data with an access frequency lower than a first threshold; and if the cold data exists, transferring the cold data from a first type of physical disk in which the cold data currently exists to a second type of physical disk, wherein input/output performance of the first type of physical disk is higher than input/output performance of the second type of physical disk.

7. The method according to claim 1, wherein the adjusting the logical disk composition information of the virtual machine according to a preset load balancing policy comprises:
monitoring whether hot data exists in the logical disk of the virtual machine, wherein the hot data is data with an access frequency higher than a second threshold; and if the hot data exists, transferring the hot data from a second type of physical disk in which the hot data currently exists to a first type of physical disk, wherein input/output performance of the first type of physical disk is higher than input/output performance of the second type of physical disk.

8. A storage management apparatus, applied to a virtual machine system, wherein a logical disk is allocated to a virtual machine in the virtual machine system, the logical disk comprises at least two types of physical disks, and the storage management apparatus comprises:
an information obtaining unit, configured to obtain logical disk composition information of the virtual machine, wherein the logical disk composition information of the virtual machine is used to identify a distribution status, in each type of physical disk, of logical disk storage space of the virtual machine; and
a load balancing unit, configured to adjust the logical disk composition information of the virtual machine according to a preset load balancing policy.

9. The storage management apparatus according to claim 8, wherein the storage management apparatus further comprises:
an information receiving unit, configured to receive storage capability indication information of the virtual machine before the information obtaining unit obtains the logical disk composition information of the virtual machine, wherein the storage capability indication information of the virtual machine comprises one or a combination of the following information: an input/output performance requirement of the logical disk of the virtual machine and a storage space performance requirement of the logical disk of the virtual machine;
a proportion determining unit, configured to determine a distribution proportion, in each type of physical disk, of the logical disk of the virtual machine according to the storage capability indication information of the virtual machine; and
a space requesting unit, configured to request storage space in each type of physical disk according to the determined distribution proportion, and create the logical disk of the virtual machine by using the requested storage space.

10. The storage management apparatus according to claim 9, wherein the storage management apparatus further comprises:
a write control unit, configured to: after receiving to-be-written data that is to be written to the logical disk of the virtual machine, if the storage capability indication information of the virtual machine indicates that input/output performance of the logical disk of the virtual machine takes priority, preferentially write the to-be-written data to storage space of a type of physical disk that has relatively high input/output performance and that is in the logical disk; or if the storage capability indication information of the virtual machine indicates that storage space performance of the logical disk of the virtual machine takes priority, preferentially write the to-be-written data to storage space of a type of physical disk that has relatively low input/output performance and that is in the logical disk.

11. The storage management apparatus according to claim 8, wherein the load balancing unit comprises:
a first monitoring unit, configured to monitor a logical disk activeness of the virtual machine; and
a first balancing unit, configured to: transfer data in storage space of a first type of physical disk in the logical disk of the virtual machine to a second type of physical disk if the logical disk activeness is lower than a preset threshold, wherein input/output performance of the first type of physical disk is higher than input/output performance of the second type of physical disk.

12. The storage management apparatus according to claim 8, wherein the load balancing unit comprises:
a second monitoring unit, configured to monitor whether there is a hotspot disk in the logical disk storage space of the virtual machine, wherein the hotspot disk is a physical disk in which an access hotspot occurs; and
a second balancing unit, configured to: if there is logical disk storage space of the virtual machine in the hotspot disk, transfer data in the hotspot physical disk of the logical disk of the virtual machine to a non-hotspot physical disk, and delete a belonging relationship between the logical disk and storage space occupied by the logical disk in the hotspot disk.

13. The storage management apparatus according to claim 8, wherein the load balancing unit comprises:
a third monitoring unit, configured to monitor whether cold data exists in the logical disk of the virtual machine, wherein the cold data is data with an access frequency lower than a first threshold; and
a third balancing unit, configured to: if the cold data exists, transfer the cold data from a first type of physical disk in which the cold data currently exists to a second type of physical disk, wherein input/output performance of the first type of physical disk is higher than input/output performance of the second type of physical disk.

14. The storage management apparatus according to claim 8, wherein the load balancing unit comprises:
a fourth monitoring unit, configured to monitor whether hot data exists in the logical disk of the virtual machine, wherein the hot data is data with an access frequency higher than a second threshold; and
a fourth balancing unit, configured to: if the hot data exists, transfer the hot data from a second type of physical disk in which the hot data currently exists to a first type of physical disk, wherein input/output performance of the first type of physical disk is higher than input/output performance of the second type of physical disk.

15. A storage device, comprising at least two types of physical disks and further comprising:
a storage management apparatus, wherein the storage management apparatus is connected to the physical disks by using a communicable link, and the storage management apparatus is the storage management apparatus according to any one of claims 8 to 14.
